# EUROPÄISCHE PATENTANMELDUNG

(11) **EP 3 520 618 A1**
(43) Veröffentlichungstag der Anmeldung: **07.08.2019**
(21) Anmeldenummer: 18154677.1
(22) Anmeldetag: 01.02.2018
(51) Int. Cl.: A21B 5/02

(54) **BACKVORRICHTUNG ZUR HERSTELLUNG VON NAHRUNGSMITTELN**

(71) Anmelder: Haas Food Equipment GmbH, 1210 Wien (AT)
(72) Erfinder: Steinböck, Michael, 3042 Holzleiten (AT)

(57) **Zusammenfassung**

Backvorrichtung zur Herstellung von Nahrungsmitteln, vorzugsweise von Formgebäck, besonders bevorzugt von Flach- und/oder Hohlwaffeln, mit einem Backraum 39 und Backplatten, wobei die Backplatten über eine Antriebsvorrichtung durch den Backraum 39 führbar sind, sowie mit einer Auftragsvorrichtung 37 zum Auftrag von Backmasse auf die Backplatten, wobei die Auftragsvorrichtung 37 dem Backraum 39 vorgeordnet ist, dadurch gekennzeichnet, dass der Auftragsvorrichtung 37, insbesondere unmittelbar, vorgeordnet eine selektiv steuerbare Temperiereinrichtung 36 vorgesehen ist, mit welcher die Oberflächenparameter, insbesondere die Temperatur, von vorbestimmten Zonen der Backplatten veränderbar ist.

## Beschreibung

Die Erfindung betrifft eine Backvorrichtung zur Herstellung von Nahrungsmitteln, vorzugsweise von Formgebäck, besonders bevorzugt von Flach- und/oder Hohlwaffeln, mit einem Backraum und Backplatten, wobei die Backplatten über eine Antriebsvorrichtung durch den Backraum führbar sind, sowie mit einer Auftragsvorrichtung zum Auftrag von Backmasse auf die Backplatten, wobei die Auftragsvorrichtung dem Backraum vorgeordnet ist.

Im Stand der Technik sind verschiedene Vorrichtungen zur Herstellung von Nahrungsmittel, insbesondere im Bereich von Süßwaren, Convenience Food oder Snacks, bekannt. Für die Herstellverfahren und/oder die zugeordneten Herstellvorrichtungen ist die Form der Endprodukte von besonderer Bedeutung. Über die Form der Produkte differenzieren die Hersteller ihre Produkte von Produkten der Konkurrenz und in vielen Fällen prägt die sehr charakteristische Form eines Produktes den Markenauftritt des Herstellers. Es ist somit zu beobachten, dass der Formgebung zunehmende Bedeutung zukommt und damit auch die Komplexität der Formen in der Herstellung dieser Produkte, insbesondere der Backformen, zunimmt.

Mit dieser Entwicklung von immer komplexerer Backformen für diese Produkte, ergeben sich besondere Anforderungen an den Herstellprozess um eine gleichbleibende Qualität der Produkte zu gewährleisten.

Es entstehen dadurch stark gegliederte Backformen, beispielsweise mit Formelementen mit kleinen Radien, so wie diese beispielsweise zur Erzeugung von zusammengesetzten Produkten, beispielsweise Waffelprodukten, mit Ober- und Unterschale, Verwendung finden.

Bei diesen Formen ergibt sich die Problematik, dass weiterhin ein gleichmäßiges Ausdampfen und/oder Ausbacken des Teiges bzw. der Backmasse gewährleistet werden muss. Aus dem Stand der Technik ist insbesondere bekannt, dass sich bei sehr anspruchsvollen Formen bzw. bei sehr stark gegliederten Formen Probleme hinsichtlich der Dichtheit des Produktes ergeben. Im Bereich der starken Gliederung entstehen manchmal Poren im Produkt. Nicht zuletzt entstehen beim Ausbacken des Produktes in diesen Bereichen Effekte wie Kavitation, wobei durch Bildung sogenannter Mikrojets durch ungleichmäßiges Ausdampfen des Teiges auch die Backplatten selbst beschädigt werden können.

Die vorliegende Erfindung versucht die bekannten Probleme aus dem Stand der Technik zumindest teilweise zu lösen.

Die Erfindung ist durch eine Backvorrichtung zur Herstellung von Nahrungsmitteln nach Anspruch 1 und ein Verfahren zur Erzeugung von gebackenen Nahrungsmitteln nach Anspruch 11 gekennzeichnet.

Durch die selektiv steuerbare Temperiereinrichtung können Oberflächenparameter, insbesondere die Temperatur, von vorbestimmten Zonen der Backplatte verändert werden. Damit kann die Backplatte in Zonen, die hinsichtlich des Ausbackens besonders kritisch sind geeignet vorbehandelt bzw. vorbereitet werden. Kritische Übergänge in der Form der Backplatte, die sich beispielsweise durch - für das nachfolgende Ausbacken der Backmasse bzw. des Teiges - kritische Radien auszeichnen, werden durch die Temperiereinrichtung so vorbereitet, dass eine beispielsweise ein, in dieser Zone, dichtes und/oder optisch ansprechendes Backgut hergestellt werden kann. Als selektiv steuerbar wird in diesem Zusammenhang eine Temperiereinrichtung verstanden, die so angepasst und/oder eingestellt werden kann, dass die Wirkung auf bestimmte Zonen der Backplatten beschränkt bleibt. Beispielsweise soll mit der Temperiereinrichtung nur die Temperatur bestimmter Zonen erhöht und/oder erniedrigt werden. In diesem Sinne ist auch wichtig, dass die Temperiereinrichtung die Zonen der Backplatten möglichst zeitnah zum Auftrag der Backmasse auf die Backplatte, insbesondere - zeitlich gesehen- unmittelbar davor behandelt. Nur auf diese Weise kann verhindert werden, dass der Effekt der Behandlung nicht durch Diffusion oder andere physikalische und/oder chemische Effekte verloren geht. Zum Energieeintrag von der Temperiereinrichtung auf die vorbestimmten Zonen der Backplatten können sämtliche physikalischen Vorgänge der Wärmestrahlung, Wärmeleitung und Konvektion verwendet werden.

Nach einer Ausführungsform der Erfindung bilden jeweils zwei der Backplatten eine Backzange mit einer Oberplatte und Unterplatte. Dazu ist ein Schließmechanismus vorgesehen, über welchen die Backzange zum Backen im Backraum geschlossen werden kann. Nach einer bevorzugten Ausführungsform ist die Temperiereinrichtung so eingerichtet, dass die Backplatten der geöffneten Backzange, insbesondere direkt, durch die Temperiereinrichtung behandelbar sind. Nach einer bevorzugten Ausführungsform ragt beispielsweise die Temperiereinrichtung zwischen die Backplatten der Backzange, nach einer anderen Ausführungsform ist die Temperiereinrichtung von dieser beabstandet angeordnet, so dass das Temperiermedium und/oder die Temperierstrahlung direkt auf die Backplatten treffen kann.

Durch eine solche Ausgestaltung einer Backzange ist es möglich formbare Produkte, wie zum Beispiel Flachwaffel oder Hohlwaffel zu backen. Durch den Schließmechanismus ist es möglich diese Produkte unter Druck zu backen, da beim Erwärmen der Backplatten die Feuchtigkeit in der Backmasse schnell verdampft und auf diese Weise zwischen den Backplatten ein Überdruck entstehen kann.

Die Backzange besteht üblicherweise aus zwei Backplatten und einen Träger an dem die Backplatten befestigt sind. Das Material des Trägers dient üblicherweise auch zur Aufnahme der Wärme im Backofen. Wohingehend die Temperiereinrichtung direkt auf die Backplatten und dabei insbesondere auf die zu behandelnden, vorbestimmten Zonen der Backplatten wirkt.

Nach einer möglichen Ausführungsform der Erfindung handelt es sich bei der Temperiereinrichtung um eine Heizeinrichtung, durch welche die vorbestimmten Zonen an den Backplatten erwärmbar sind. Durch das Erwärmen der Backplatte bildet sich in an den erwärmten Bereichen ein in diesen Bereichen des Produktes stabilere Produktstruktur. Beispielsweise kann auf diese Weise die Porigkeit des fertig gebackenen Produktes in diesem Bereich verringert werden.

Nach einer möglichen Ausführungsform der Erfindung handelt es sich bei der Heizeinrichtung um zumindest einen Strahlungsbrenner, insbesondere einen Infrarotbrenner. Dabei sind vorbestimmten Zonen sowohl auf der Oberplatte als auch auf der Unterplatte vorgesehen, so dass über den zumindest einen Strahlungsbrenner die vorbestimmten Zonen auf der Ober- und Unterplatte einer Backzange erwärmbar sind. Durch einen elektrischen Strahlungsbrenner und/oder eine andere Art einer elektrischen Heizeinrichtung, beispielsweise einer induktiven Heizung, kann auf sehr effiziente Weise und gezielt in vorbestimmte Bereiche Energie in die Backplatte eingebracht werden.

Nach einer weiteren Ausführungsform der Erfindung handelt es sich bei der Temperiereinrichtung um eine Kühlvorrichtung, durch welche die vorbestimmten Zonen an den Backplatten kühlbar sind. Auch durch das Kühlen der Backplatte bildet sich in an den abgekühlten Bereichen ein in diesen Bereichen des Produktes stabilere Produktstruktur. Beispielsweise kann auf diese Weise die Porigkeit des fertig gebackenen Produktes in diesem Bereich verringert werden.

Nach einer weiteren möglichen Ausführungsform der Erfindung handelt es sich bei der Kühlvorrichtung um zumindest eine Gasstrahleinrichtung. Dabei sind vorbestimmte Zonen sowohl auf der Oberplatte als auch auf der Unterplatte definiert, so dass über die zumindest eine Gasstrahleinrichtung die vorbestimmten Zonen auf der Ober- und Unterplatte der Backzange kühlbar sind.

Durch Verwendung eines oder mehrerer Gasstrahlen können die vorbestimmten Bereiche der Backplatte sehr gezielt und effizient gekühlt werden.

Nach einer weiteren möglichen Ausführungsform der Erfindung handelt es sich bei der Temperiereinrichtung um eine Sprühvorrichtung, durch welche die vorbestimmten Zonen an den Backplatten mit einem Medium besprühbar sind.

Nach einer besonderen Ausführungsform handelt es sich dabei um ein zumindest teilweise flüssiges Medium beispielsweise um ein Trennmittel und/oder einen anderen Stoff/Medium mit welchem die Oberflächencharakteristik manipuliert werden kann. Beispielsweise kann auch diese Weise die Oberflächenspannung des zu behandelnden Bereiches beeinflusst werden.

Nach einer weiteren möglichen Ausführungsform der Erfindung, weist die Sprühvorrichtung zumindest eine Düse auf und sind vorbestimmte Zonen sowohl auf der Oberplatte als auch auf der Unterplatte vorgesehen, so dass über die zumindest eine Düse die vorbestimmten Zonen auf der Ober- und Unterplatte der Backzange mit dem zumindest teilweise flüssigem Medium und/oder einem feinkörnigen zumindest teilweise festem Medium besprühbar sind.

Durch Düsen, die insbesondere getrennt regelbar sind, kann die Behandlung der vorbestimmten Zonen der Backplatten sehr individuell und zielgerichtet eingestellt werden.

Nach einer besonderen Ausführungsform ist beispielsweise das Besprühen mit einem Trennmittel, Fetten und/oder Zucker, in flüssiger und/oder zumindest teilweise fester Form möglich.

Nach einer weiteren möglichen Ausführungsform der Erfindung weist die Antriebsvorrichtung ein zum Transport der Backplatten durch den Backraum vorgesehenes umlaufenden Antriebsmittel auf, über das die Backplatten entlang einer vorbestimmten Bahn durch die Backvorrichtung führbar sind.

Nach einer besonderen Ausführungsform spricht man von einer Backzangenkette, da die Backzangen entlang und/oder mittels einer Kette und/oder einer kettenähnlichen Vorrichtung geführt bzw. durch den Ofen geschleppt werden.

Nach einer weiteren möglichen Ausführungsform der Erfindung ist die Antriebsvorrichtung so eingerichtet, dass die Backplatten von der Auftragsvorrichtung in den Backraum, von dem Backraum zu einer Abnahmevorrichtung und dann wiederum zur Auftragsvorrichtung führbar sind.

Nach einer weiteren möglichen Ausführungsform der Erfindung ist die Backvorrichtung Teil einer Anlage zur Herstellung von Waffeln. Die Temperiereinrichtung ist zwischen der Einrichtung zur Waffelabnahme und der Auftragsvorrichtung angeordnet.

Nach einer weiteren Ausführungsform der Erfindung ist ein Verfahren zur Erzeugung von gebackenen Nahrungsmitteln vorgesehen. Dabei wird in einer Backvorrichtung über eine Auftragsvorrichtung Backmasse und/oder Teig auf Backplatten aufgetragen und darauffolgend die Backplatten über eine Antriebsvorrichtung durch einen Backraum geführt. Mit einer selektiv steuerbaren Temperiereinrichtung werden aktiv durch Einwirkung von Strahlung und/oder eines Temperiermediums Oberflächenparameter, insbesondere die Temperatur, von vorbestimmten Zonen der Backplatte unmittelbar vor dem Auftrag von Backmasse und/oder verändert.

Nach einer weiteren Ausführungsform der Erfindung wird durch die Temperiereinrichtung Wärmestrahlung, beispielsweise durch elektrische, insbesondere induktive Heizelemente der Temperiereinrichtung, auf die vorbestimmten Zonen der Backplatte abgegeben.

Nach einer weiteren Ausführungsform der Erfindung werden die vorbestimmten Zonen der Backplatte durch die Temperiereinrichtung mittels Konvektion erwärmt und/oder gekühlt.

Nach einer weiteren Ausführungsform der Erfindung wird mit der Temperiereinrichtung ein zumindest teilweise flüssiges und/oder zumindest teilweise feinkörniges festes Temperiermedium auf die vorbestimmten Zonen der Backplatte aufgebracht.

Nach einer weiteren Ausführungsform der Erfindung werden mit der Backvorrichtung Waffeln hergestellt werden, wobei die Backplatten nach dem Auftrag der Backmasse und/oder des Teiges in der Auftragsvorrichtung zum Backen durch den Backraum und nachfolgend zu einer Abnahmevorrichtung zur Waffelblattabnahme geführt werden und die Backplatten mittels der Temperiereinrichtung zwischen der Abnahmevorrichtung und der Auftragsvorrichtung behandelt werden.

Die Erfindung ist nachfolgend anhand mehrerer schematischer nicht einschränkender Zeichnungen gezeigt. Es zeigen:
Fig. 1 eine schematische Darstellung einer Backvorrichtung.
Fig. 2 eine schematische Darstellung einer weiteren Backvorrichtung mit der erfindungsgemäßen Temperiervorrichtung
Fig. 3 zeigt ein Detail der Backvorrichtung aus Fig. 2
Fig. 4a, 4b, 4c alternative Ausführung von Düsen zur Aufbringung eines Mediums auf Backplatten
Fig. 5a und 5b alternative Anordnung von einzeln regelbaren Düsen zur Kühlung und/oder Beheizung und/oder Besprühung der Backplatten
Fig. 6 schematisch eine geöffnete Backzange mit verschiedenen Heiz- und/oder Kühlzonen

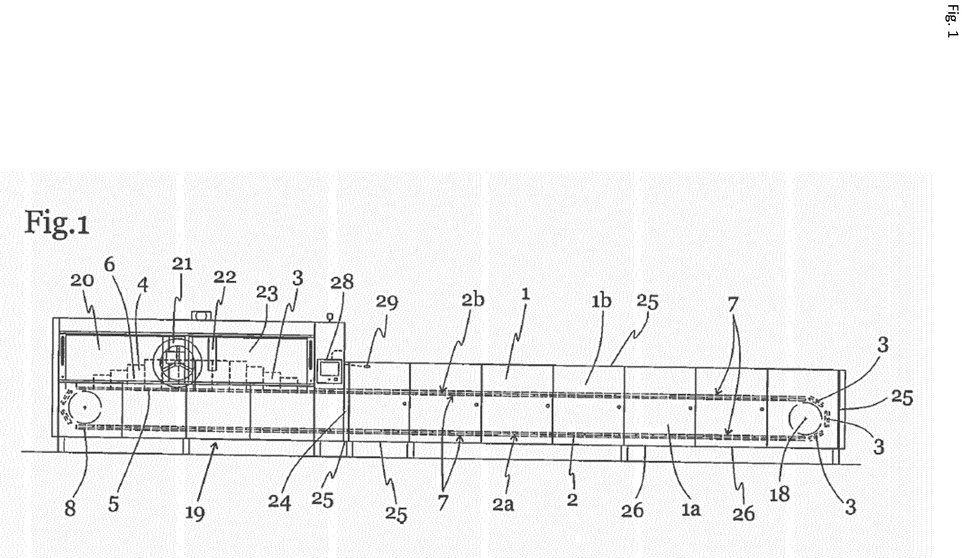

Fig. 1 zeigt eine schematische Ansicht einer Backvorrichtung. Diese Backvorrichtung ist beispielsweise zur Erzeugung von Flachwaffeln eingerichtet. Die Backvorrichtung weist einen Backraum 1 mit einem unteren Backbereich 1a und einem oberen Backbereich 1b auf. Backplatten bilden jeweils mit einer oberen Backplatte bzw. Oberplattenanordnung 4 und einer unteren Backplatte bzw. Unterplattenanordnung 5 und einem Schließmechanismus eine Backzange 3, die entlang einer Backzangenkette 2 im Umlauf durch den Backraum 1 gefördert werden. Die Backzangen werden dabei entlang einer unteren Transportebene 2a und oberen Transportebene 2b, insbesondere durch einen Endlosförderer befördert. Der Endlosförderer kann beispielsweise als Kette, an welcher die Backzangen befestigt sind ausgebildet werden. Durch die beiden Backplattenanordnungen 4 und 5 wird in der Backzange 3 eine Backform 6 gebildet, in welcher der Teig bzw. die Backmasse ausgebacken wird. Über einen großen Teil des Transports der Backzangen entlang der Transportebenen sind die Backzangen geschlossen. Im vorderen Ofenteil 19 befindet sich eine Einrichtung zum Aufklappen der Backzangen 20 an welcher die fertig gebackenen Produkte, beispielsweise die Flach- oder Hohlwaffeln durch eine Abnahmevorrichtung 21 von den Backplatten abgenommen werden. Im einfachsten Fall fallen die Waffeln dabei aus den Backplatten und werden durch einen Förderer aufgenommen und gesammelt bzw. weiter transportiert. Nach der der Abnahme der Produkte werden die geöffneten Backplatten zur Auftragsvorrichtung 22 befördert, in welcher auf die Backplatten Backmasse und/oder Teig aufgetragen wird. Vor diesem Backmassen- oder Teigauftrag werden vorbestimmte Zonen der Backplatte durch die Temperiereinrichtung (nicht dargestellt) behandelt. Die Temperiereinrichtung befindet sich demnach nach einer Ausführungsform zwischen der Abnahmevorrichtung und der Auftragsvorrichtung. Nach dem Auftrag der Backmasse und/oder dem Teig werden die Backplatten in der Einrichtung zum Schließen der Backplatten 23, wieder geschlossen. Zwischen dem beheizten Backraum 1 und der vorderen Ofenteil 19 ist nach einer möglichen Ausführungsform eine Trenneinrichtung 24 vorgesehen. Durch die Führung der Backzangenkette 2 über einen hinteren Umlenkpunkt 18, beispielsweise mit einer Umlenkrolle, ändern die Backzange 3 ihre Lage im Backraum 1. Die Backzange 1 besteht aus außenliegenden Rückenflächen 7, welche geeignet zur Aufnahme von Wärme ausgebildet sind, sowie aus einem mit den Rückenflächen 7 verbundenen Basiskörper 8, der auf der, der Rückenfläche abgewandten Seite, die Backform 6 bildet. Der Basiskörper 8 kann beispielsweise auch mehrteilig, insbesondere mit einem Rahmen und Einlegeteilen, ausgeführt sein. Je nach Ausführung können Rückenfläche, Basiskörper und/oder Backplatte gemeinsam aus einem Stück oder eben mehrteilig ausgeführt werden. Im vorderen Ofenteil 19 ist ein weiterer Umlenkpunkt vorgesehen. Zusätzlich weist die Vorrichtung eine Steuerungseinheit 28 auf. Über diese Steuerungseinheit werden unterschiedliche Parameter des Backofens, wie beispielsweise der Antrieb der Backzangenkette und/oder die Antriebe weiterer Komponenten und/oder die Beheizung des Backraumes 1 gesteuert. Nach einer besonderen Ausführungsform ist zumindest ein Sensor 29 vorgesehen. Dieser Sensor 29 kann beispielsweise als Temperatur-, Feuchte- oder Bewegungssensor ausgeführt sein. Nach einer besonderen Ausführungsform wird dieser Sensor als Eingangsgröße für die Steuerungseinheit 28 verwendet. Die

Unterseite 26 des Backraums ist nach einer bevorzugten Ausführungsform geschlossen ausgeführt. Der Backraum 1 weist nach einer besonderen Ausführungsform eine Wärmeisolierung 25 auf Die Backvorrichtung weist im Backraum eine Anzahl vonHeizvorrichtungen auf. Diese sind in Fig. 1 aus Gründen der Übersichtlichkeit nicht dargestellt. Dabei sind nach verschiedenen bevorzugten Ausführungsformen im Backraum 1 sowohl Heizvorrichtungen entlang der oberen 2b als auch der unteren 2a Transportebene vorgesehen. Nach einer besonderen Ausführungsform handelt es sich bei diesen Heizvorrichtungen um leistungsstarke Gasbrenner die insbesondere die Rückflächen der Backzangen aufheizen.

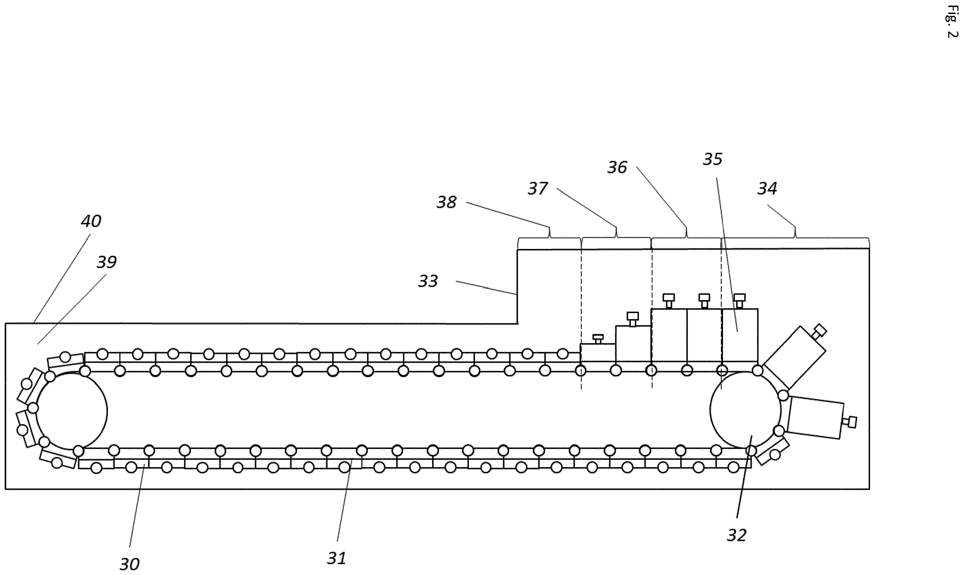

In Fig. 2 ist eine weitere Ausführungsform einer Backvorrichtung gezeigt. Es handelt sich bei dieser Darstellung um eine Anlage zur Produktion von Flach- oder Hohlwaffeln. In dieser schematischen Figur ist wiederum eine Backzangenkette 30 mit umlaufenden Backzangen 31 ersichtlich. Im Bereich der Umlenkung 32 ist im vorderen Ofenbereich 33 der Backvorrichtung ersichtlich, wie die Backzangen im Bereich der Produktabnahme 34 zur Abnahme der Waffel geöffnet werden. Die geöffnete Backzange 35 durchfährt darauf folgend einen Bereich der Temperiereinrichtung 36, also jenen Bereich in welchem die Backplatten beheizt, gekühlt und/oder mit einem Medium zur Beeinflussung der Oberflächeneigenschaft der Backplatte besprüht werden. Danach wird die offene Backzange in den Aufgussbereich 37 gefördert und darauf folgend im Verschlussbereich 38 wiederum geschlossen. Im geschlossenen und verriegelten Zustand fährt die Backzange durch den Backraum 39 zum Ausbacken des zwischen den Backplatten befindlichen Teiges oder der Backmasse. Speziell im Backraum weist die Backvorrichtung eine geeignete Wärmeisolierung 40 auf.

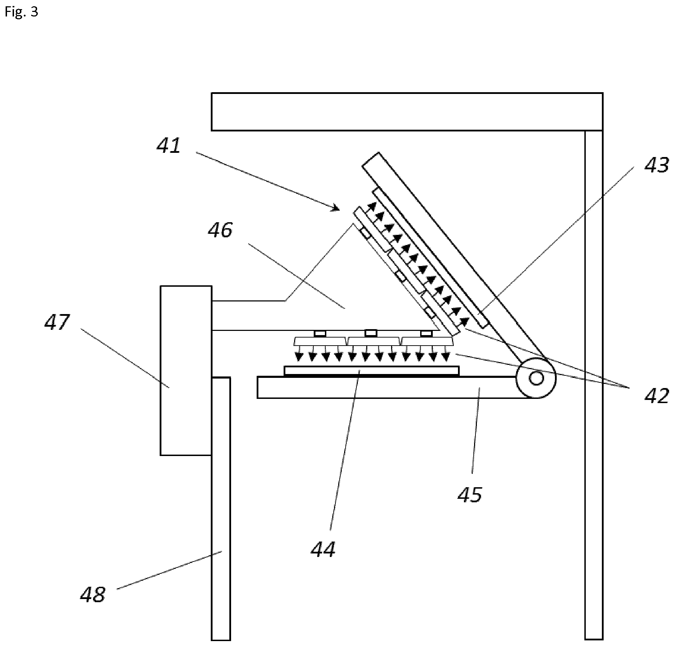

In Fig. 3 ist ein Detail der Backvorrichtung nach Fig. 2 gezeigt. Im Detail ist die Temperiereinrichtung 41 in einer Ausführung mit Strahlungsbrenner 42 ausgeführt. Die Strahlungsbrenner 42 sind einerseits auf die obere Backplatte 43 und andererseits auf die untere Backplatte 44 gerichtet. Die Backplatten sind dabei auf einem entsprechenden Trägermaterial angeordnet und bilden die Backzange 45. Die Strahlungsbrenner 42 sind dabei als Gasbrenner ausgeführt, wobei die Wärmeenergie durch Strahlung und/oder Konvektion auf die Backplatten übertragen wird. Die Temperiereinrichtung 41 weist einen neben den Brennern eine Versorgungsleitung 46 zur Versorgung der Brenner und eine Steuereinheit und/oder einen Schaltschrank 47 zur Steuerung der Brenner auf. Nach einer Ausführungsform ist die Temperiereinrichtung 41 an dem Maschinengehäuse 48 der Backvorrichtung angeordnet bzw. befestigt. Nach einer weiteren alternativen Ausführungsform sind die Brenner als elektrisch betriebene Infrarot-Brenner ausgeführt. Wie aus den Figuren hervorgeht ist es durch die einzeln steuerbaren Brenner möglich auf den Backplatten Zonen unterschiedlicher Wärme einzustellen.

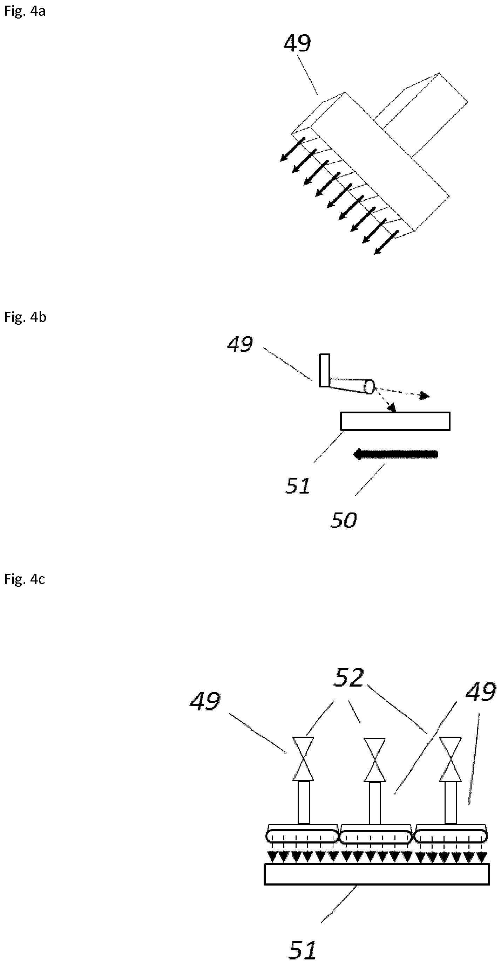

In Fig. 4a, 4b, 4c sind alternative Ausführung von Düsen zur Aufbringung eines Mediums auf die Backplatten ersichtlich. In Fig. 4a, 4b, 4c sind dazu schematisch verschiedene Ansichten einer Fächerdüse 31 ersichtlich. Diese Fächerdüse 49, wie in Fig. 4a gezeigt, weist beispielsweise mehrere Kanäle aus und ermöglicht ein Heiz- oder Kühlmedium, beispielsweise ein Kühlgas, auf den Backplatten aufzubringen. Dabei wird das Kühlgas, wie in Fig. 4b ersichtlich beispielsweise entgegen der Förderrichtung 50 der Backplatte 51 auf die Backplatte 51 aufgebracht. Wie in Fig. 4c ersichtlich können dazu beispielsweise drei nebeneinander angeordnete Fächerdüsen 49 verwendet werden, die über die Breite der Backplatte diese mit dem Kühlgas beaufschlagen. Jede Fächerdüse weist dazu ein, insbesondere unabhängig voneinander steuer- bzw. regelbares Regelventil 52 auf. Dadurch ist es auch möglich verschiedene Zonen der Backplatte unterschiedlich zu kühlen. Nach einer weiteren Ausführungsform wird Trennmittel und/oder Öl oder ein anderes geeignetes Medium auf die Backplatten aufgebracht, das beispielsweise neben einem Temperiereffekt einen zusätzlichen Effekt auf die Herstellung des Backgutes zeitigt. Beispielsweise kann durch ein Trennmittel eine leichtere Trennung des Backgutes von der Backform erreicht werden.

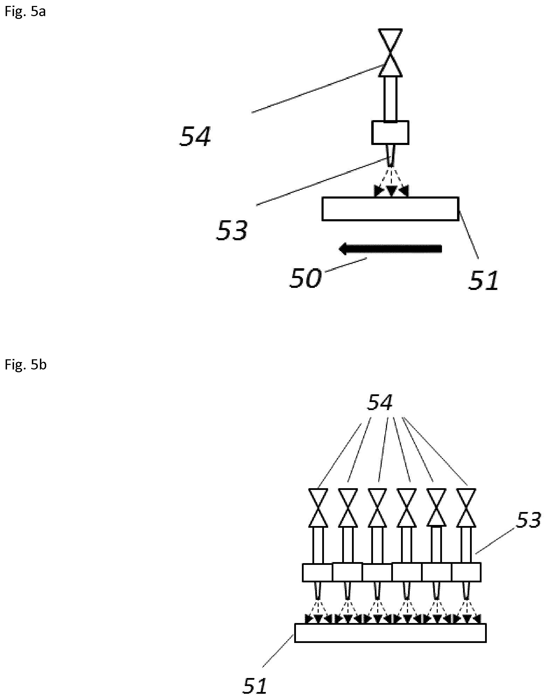

In Fig. 5a und 5b ist schematisch die Anordnung von einzeln regelbaren Düsen zur Kühlung und/oder Beheizung und/oder Besprühung der Backplatte gezeigt. Über die einzelnen Düsen 53 die jeweils über getrennte Regelventile 54 steuer- und/oder regelbar sind, können, wie hier gezeigt 6 Zonen unterschiedlicher Kühlgrade eingestellt werden.

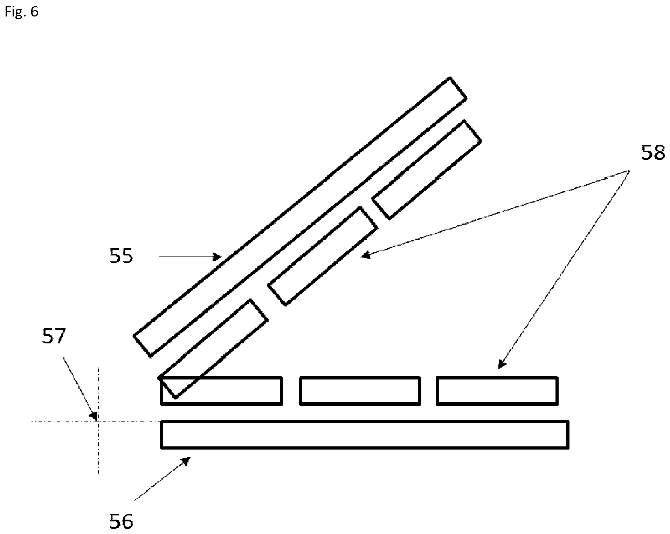

Schließlich ist in Fig. 6 schematisch eine geöffnete Backzange gezeigt, wobei über eine geeignete Temperiereinrichtung sowohl auf der oberen Backplatte 55 wie auch auf der unteren Backplatte 56 verschiedene Heiz- und/oder Kühlzonen eingerichtet werden. Die Kühl- und/oder Heizflächen werden in der Figur schematisch als Rechtecke 58 dargestellt. In Fig. 6 ist auch schematisch die Lage des Scharniers 57der Backzange skizziert.

## Patentansprüche

1. Backvorrichtung zur Herstellung von Nahrungsmitteln, vorzugsweise von Formgebäck, besonders bevorzugt von Flach- und/oder Hohlwaffeln, mit einem Backraum und Backplatten, wobei die Backplatten über eine Antriebsvorrichtung durch den Backraum führbar sind, sowie mit einer Auftragsvorrichtung zum Auftrag von Backmasse und/oder Teig auf die Backplatten, wobei die Auftragsvorrichtung dem Backraum vorgeordnet ist, **dadurch gekennzeichnet, dass** der Auftragsvorrichtung, insbesondere unmittelbar, vorgeordnet eine selektiv steuerbare Temperiereinrichtung vorgesehen ist, mit welcher die Oberflächenparameter, insbesondere die Temperatur, von vorbestimmten Zonen der Backplatten veränderbar ist.

2. Backvorrichtung nach Anspruch 1, **dadurch gekennzeichnet, dass** jeweils zwei der Backplatten eine Backzange mit einer Oberplatte und Unterplatte bilden und ein Schließmechanismus vorgesehen ist, über welchen die Backzange zum Backen im Backraum geschlossen werden kann und die Temperiereinrichtung so eingerichtet ist, dass die Backplatten der geöffneten Backzange, insbesondere direkt, durch die Temperiereinrichtung behandelbar sind.

3. Backvorrichtung nach Anspruch 2, **dadurch gekennzeichnet, dass** es sich bei der Temperiereinrichtung um eine Heizeinrichtung handelt, durch welche die vorbestimmten Zonen an den Backplatten erwärmbar sind.

4. Backvorrichtung nach Anspruch 3, **dadurch gekennzeichnet, dass** es sich bei der Heizeinrichtung um zumindest einen Strahlungsbrenner, vorzugsweise einen Infrarotbrenner, handelt und die vorbestimmten Zonen sowohl auf der Oberplatte als auch auf der Unterplatte vorgesehen sind, so dass über den zumindest einen Strahlungsbrenner die vorbestimmten Zonen auf der Ober- und Unterplatte der Backzange durch direkte Bestrahlung erwärmbar sind.

5. Backvorrichtung nach Anspruch 2, **dadurch gekennzeichnet, dass** es sich bei der Temperiereinrichtung um eine Kühlvorrichtung handelt, durch welche die vorbestimmten Zonen an den Backplatten kühlbar sind.

6. Backvorrichtung nach Anspruch 5, **dadurch gekennzeichnet, dass** es sich bei der Kühlvorrichtung um zumindest eine Gasstrahleinrichtung handelt und die vorbestimmten Zonen sowohl auf der Oberplatte als auch auf der Unterplatte vorgesehen sind, so dass über die zumindest eine Gasstrahleinrichtung die vorbestimmten Zonen auf der Ober- und Unterplatte der Backzange kühlbar sind.

7. Backvorrichtung nach Anspruch 2, **dadurch gekennzeichnet, dass** es sich bei der Temperiereinrichtung um eine Sprühvorrichtung handelt, durch welche die vorbestimmten Zonen an den Backplatten mit einem zumindest teilweise flüssigem und/oder einem feinkörnigem zumindest teilweise festem Medium besprühbar sind.

8. Backvorrichtung nach Anspruch 7, **dadurch gekennzeichnet, dass** die Sprühvorrichtung zumindest eine Düse aufweist und die vorbestimmten Zonen sowohl auf der Oberplatte als auch auf der Unterplatte vorgesehen sind, so dass über die zumindest eine Düse die vorbestimmten Zonen auf der Ober- und Unterplatte der Backzange mit dem Medium besprühbar sind.

9. Backvorrichtung nach einem der vorhergehenden Ansprüche, **dadurch gekennzeichnet, dass** die Antriebsvorrichtung ein zum Transport der Backplatten durch den Backraum vorgesehenes umlaufenden Antriebsmittel aufweist, über das die Backplatten entlang einer vorbestimmten Bahn durch die Backvorrichtung führbar sind.

10. Backvorrichtung nach einem der vorhergehenden Ansprüche, dass die Antriebsvorrichtung so eingerichtet ist, dass die Backplatten von der Auftragsvorrichtung in den Backraum, von dem Backraum zu einer Abnahmevorrichtung und dann wiederum über die Temperiereinrichtung zur Auftragsvorrichtung führbar sind.

11. Verfahren zur Erzeugung von gebackenen Nahrungsmitteln, mit einer Backvorrichtung und einer Anzahl von Backplatten, wobei über eine Auftragsvorrichtung Backmasse und/oder Teig auf die Backplatten aufgetragen und darauffolgend die Backplatten über eine Antriebsvorrichtung durch einen Backraum geführt werden, und eine selektiv steuerbare Temperiereinrichtung vorgesehen ist, über welche aktiv durch Einwirkung von Wärme/Kälte und/oder eines Temperiermediums die Oberflächenparameter, insbesondere die Temperatur, von vorbestimmten Zonen der Backplatten vor, insbesondere unmittelbar vor, dem Auftrag von Backmasse und/oder Teig verändert wird.

12. Verfahren nach Anspruch 11, **dadurch gekennzeichnet, dass** durch die Temperiereinrichtung Wärmestrahlung, beispielsweise durch elektrische, insbesondere induktive, Beheizung auf die vorbestimmten Zonen der Backplatte abgegeben wird.

13. Verfahren nach Anspruch 11, **dadurch gekennzeichnet, dass** die vorbestimmten Zonen der Backplatte durch die Temperiereinrichtung mittels Konvektion erwärmt und/oder gekühlt werden.

14. Verfahren nach Anspruch 11, **dadurch gekennzeichnet, dass** mit der Temperiereinrichtung ein zumindest teilweise flüssiges und/oder zumindest teilweise feinkörniges festes Temperiermedium auf die vorbestimmten Zonen der Backplatte aufgebracht wird.

15. Verfahren nach einem der Ansprüche 11 bis 14, **dadurch gekennzeichnet, dass** mit der Backvorrichtung Waffeln hergestellt werden, wobei die Backplatten nach dem Auftrag der Backmasse und/oder Teiges in der Auftragsvorrichtung zum Backen durch den Backraum und nachfolgend zu einer Abnahmevorrichtung zur Waffelblattabnahme geführt werden und die Backplatten mittels der Temperiereinrichtung zwischen der Abnahmevorrichtung und der Auftragsvorrichtung behandelt werden.
